# EUROPÄISCHE PATENTSCHRIFT

(11) **EP 3 116 630 B1**
(45) Veröffentlichungstag und Bekanntmachung des Hinweises auf die Patenterteilung: **06.06.2018**
(21) Anmeldenummer: 15709181.0
(22) Anmeldetag: 11.03.2015
(51) Int. Cl.: B01D 53/94, F01N 3/00

(54) **KATALYSATORSYSTEM FÜR BENZINVERBRENNUNGSMOTOREN MIT DREIWEGEKATALYSATOREN UND SCR-KATALYSATOR**
CATALYST SYSTEM FOR GASOLINE COMBUSTION ENGINES, HAVING THREE-WAY CATALYSTS AND SCR CATALYST
SYSTÈME CATALYTIQUE POUR DES MOTEURS À COMBUSTION INTERNE À ESSENCE COMPRENANT DES CATALYSEURS TROIS VOIES ET UN CATALYSEUR SCR

(30) Priorität: 13.03.2014 DE 102014204682
(43) Veröffentlichungstag der Anmeldung: 18.01.2017
(73) Patentinhaber: UMICORE AG & CO. KG, 63457 Hanau-Wolfgang (DE)
(72) Erfinder: SCHOENHABER, Jan, 64287 Darmstadt (DE); SCHMIDT, Marcus, 65462 Ginsheim (DE); ADAM, Frank, 63589 Linsengericht (DE)
(86) Internationale Anmeldenummer: PCT/EP2015/055061
(87) Internationale Veröffentlichungsnummer: WO 2015/135983

(56) Entgegenhaltungen:
- EP-A2- 0 915 244
- EP-A2- 1 184 555
- US-A1- 2009 260 349
- US-A1- 2010 043 402
- US-A1- 2011 202 253
- US-A1- 2014 039 781

## Beschreibung

Die vorliegende Erfindung richtet sich auf ein Katalysatorsystem zur Verringerung schädlicher Abgasbestandteile von mit Benzin betriebenen Verbrennungsmotoren sowie ein entsprechendes Verfahren zur Abgasreinigung. Das System zeichnet sich durch eine besondere Anordnung von Katalysatoren aus und kommt bei Motoren zum Einsatz, die überwiegend mit im Mittel stöchiometrischem Luft/Kraftstoffgemisch betrieben werden.

Das Abgas von Verbrennungsmotoren in Kraftfahrzeugen enthält typischerweise die Schadgase Kohlenmonoxid (CO) und Kohlenwasserstoffe (HC), Stickoxide (NOₓ) und gegebenenfalls Schwefeloxide (SOₓ), sowie Partikel, die überwiegend aus Rußrückständen und gegebenenfalls anhaftenden organischen Agglomeraten bestehen. CO, HC und Partikel sind Produkte der unvollständigen Verbrennung des Kraftstoffs im Brennraum des Motors. Stickoxide entstehen im Zylinder aus Stickstoff und Sauerstoff der Ansaugluft, wenn die Verbrennungstemperaturen lokal 1400°C überschreiten. Schwefeloxide resultieren aus der Verbrennung organischer Schwefelverbindungen, die in nicht-synthetischen Kraftstoffen immer in geringen Mengen enthalten sind. Zur Entfernung dieser für Umwelt und Gesundheit schädlichen Emissionen aus den Abgasen von Kraftfahrzeugen sind eine Vielzahl katalytischer Abgasreinigungstechnologien entwickelt worden, deren Grundprinzip üblicherweise darauf beruht, dass das zu reinigende Abgas über einen Katalysator geleitet wird, der aus einem Durchfluss- (flow-through) oder einem Wandflusswabenkörper (wall-flow) und einer darauf aufgebrachten katalytisch aktiven Beschichtung besteht. Dieser Katalysator fördert die chemische Reaktion verschiedener Abgaskomponenten unter Bildung unschädlicher Produkte wie beispielsweise Kohlendioxid und Wasser.

Dabei unterscheiden sich Wirkweise und Komposition der zum Einsatz kommenden Katalysatoren je nach Zusammensetzung des zu reinigenden Abgases und je nach zu erwartendem Abgastemperaturniveau am Katalysator zum Teil erheblich. Eine Vielzahl der als katalytisch aktive Beschichtung zum Einsatz kommenden Kompositionen enthält Komponenten, in denen unter bestimmten Betriebsbedingungen eine oder mehrere Abgasbestandteile zwischenzeitlich gebunden und bei einer geeigneten Änderung der Betriebsbedingungen wieder gezielt freigesetzt werden können. Komponenten mit einer derartigen Kapazität werden nachstehend allgemein als Speichermaterialien bezeichnet.

Beispielsweise werden Sauerstoff speichernde Materialien in Dreiwegkatalysatoren zur Entfernung von CO, HC und NOₓ aus dem Abgas von überwiegend im Mittel stöchiometrischem Luft/Kraftstoff-Gemisch betriebenen Benzinmotoren (Otto-Motoren) eingesetzt. Die bekanntesten Sauerstoffspeichermaterialien sind Cer-Zirkon-Mischoxide, die mit weiteren Oxiden, insbesondere mit Selten-Erd-Metalloxiden wie beispielsweise Lanthanoxid, Praseodymoxid, Neodymoxid oder Yttriumoxid dotiert sein können (Autoabgaskatalysatoren, Grundlagen - Herstellung - Entwicklung - Recycling - Ökologie, Christian Hagelüken, 2. Auflage, 2005, S. 49; Catalytic Air Pollution Control, Commercial Technology, R. Heck et al., 1995, S. 73-112).

Der Ausdruck "überwiegend im Mittel" nimmt Rücksicht auf die Tatsache, dass moderne Benzinmotoren nicht statisch bei einem festen Luft/Kraftstoffverhältnis betrieben werden. Dreiwegkatalysatoren, die Sauerstoffspeichermaterial enthalten, werden in derartigen Ottomotoren unter Bedingungen mit einem diskontinuierlichen Verlauf der Luftzahl λ beaufschlagt. Sie unterlaufen in definierter Weise einem periodischen Wechsel der Luftzahl λ und somit einem periodischen Wechsel von oxidierenden und reduzierenden Abgasbedingungen. Dieser Wechsel der Luftzahl λ ist in beiden Fällen wesentlich für das Abgasreinigungsergebnis. Hierzu wird der λ-Wert des Abgases mit sehr kurzer Zyklenzeit (ca. 0,5 bis 5 Hertz) und einer Amplitude Δλ von 0,005 ≤ Δλ ≤ 0,07 um den Wert λ = 1 (reduzierende und oxidierende Abgasbestandteile liegen in stöchiometrischem Verhältnis zueinander vor) geregelt. Im Durchschnitt ist in solchen Betriebszuständen daher das Abgas als "im Mittel" stöchiometrisch zu bezeichnen. Damit sich diese Abweichungen nicht nachteilig auf das Abgasreinigungsergebnis bei Überleiten des Abgases über den Dreiwegkatalysator auswirken, gleichen die im Katalysator enthaltenen Sauerstoffspeichermaterialien diese Abweichungen bis zu einem gewissen Grad aus, indem sie Sauerstoff nach Bedarf aus dem Abgas aufnehmen oder ins Abgas abgeben (Catalytic Air Pollution Control, Commercial Technology, R. Heck et al., 1995, S. 90). Aufgrund der dynamischen Betriebsweise des Motors im Fahrzeug treten zeitweise jedoch auch weitere Abweichungen von diesem Zustand auf. Zum Beispiel bei extremen Beschleunigungen oder beim Abbremsen im Schubbetrieb können Betriebszustände des Motors und damit des Abgases eingestellt werden, die im Mittel über- oder unterstöchiometrisch sein können. Allerdings weisen die hier beschriebenen Ottomotoren ein Abgas auf, welches überwiegend, d.h. in der überwiegenden Zeit des Verbrennungsbetriebs mit im Mittel stöchiometrischem Luft/Kraftstoffverhältnis betrieben wird.

Die ständig steigenden Anforderungen an die Emissionsminderung von Verbrennungsmotoren machen eine stetige Weiterentwicklung der Katalysatoren notwendig. Besondere Bedeutung haben dabei neben der Anspringtemperatur des Katalysators für die Umsetzung der Schadstoffe seine Temperaturstabilität und natürlich das Ausmaß der Verminderung der wesentlichen Abgasbestandteile eines Ottomotors, Kohlenwasserstoffe, Kohlenmonoxid und Stickoxide.

Neben der Verminderung dieser Primäremissionen zwingen neuere Abgasgesetzgebungen in den USA (GHG Emission Standard), nicht nur die oben beschriebenen Primäremissionen drastisch zu senken, sondern fordern auch, die Emissionen von Sekundäremissionen, wie z.B. Methan (CH₄) und das potente Treibhausgas Lachgas (N₂O) maximal zu unterdrücken (Federal Register; Vol. 75, No. 88, 2010 / Rules and Regulations, Page 25399; Federal Register; Vol. 77, No. 199, 2012 / Rules and Regulations, Page 62799 ; http://epa.gov/climatechange/ghgemissions/gases/n2o.html). Derartige Richtlinien für den Ausstoß der Sekundäremissionen NH₃, CH₄ und N₂O werden aktuell ebenfalls in der Europäischen Union diskutiert und werden ggf. noch in die 2014 in Kraft tretende EU6, auf jeden Fall jedoch in eine spätere Gesetzgebung integriert werden.

Moderne Systeme zur Vermeidung von schädlichen Abgasen bei stöchiometrisch betriebenen Verbrennungsmotoren arbeiten häufig bereits mit mindestens zwei Dreiwegkatalysatoren, wobei einer zur schnelleren Erwärmung motornah positioniert ist und sich der andere im kälteren Unterbodenbereich befindet (Ball, D., Moser, D., SAE Technical Paper 2012-01-1245, 2012). Bei einer derartigen Anordnung kann ein größerer Temperaturbereich durch die Aktivitätsfenster der Dreiwegkatalysatoren abgedeckt werden.

Die Direkteinspritzung des Kraftstoffs in den Brennraum von Benzinmotoren und der turnusgemäß nach dem Auslassventil angeordnete Turbolader führen jedoch zu einer stetigen Abkühlung der Abgastemperatur. Diese niedrigen Temperaturen reichen vor allem im städtischen Fahrbetrieb und bei Überlandfahrten nicht mehr aus, um den Unterbodenkatalysator mit ausreichender Konversionseffizienz zu betreiben. Demgegenüber ist bekannt, dass die N₂O-Bildung an einem Dreiwegkatalysator bei stöchiometrisch betriebenen Verbrennungsmotoren in einem bestimmten Temperaturintervall und bei bestimmten λ-Werten besonders intensiv ist (Hausberger, ACCC-Workshop "N₂O und das Kyoto-Ziel", http://www.accc.gv.at/pdf/no-hausberger.pdf; Koike, N., Odaka, M., Suzuki,H., SAE Technical Paper 1999-01-1081, 1999; Odaka, M., Koike, N., Suzuki, H., SAE Technical Paper 980676, 1998; Gifhorn et al., Einfluss abgasspezifischer Parameter auf die N2O-Bildung am Pd/Rh-Katalysator, MTZ Motortechnische Zeitschrift 59 (1998) 6). Die kühlere Abgastemperatur bewirkt demzufolge eine erhöhte Bildung des Treibhausgases N₂O, da sich die Betttemperatur des Unterbodenkatalysators häufig permanent im optimalen Lachgasbildungsfenster von 250-350°C bewegt.

Es ist bekannt, dass Dreiwegkatalysatoren, wenn sie mit einem fetten Abgasgemisch beaufschlagt werden, NH₃ produzieren (SAE 2011010307). Demzufolge sind Untersuchungen getätigt worden, bei denen sich mittels eines Systems bestehend aus motornahem (cc) Dreiwegkatalysator (TWC) und einem im Unterboden (uf) befindlichen NH₃-speicherfähigen SCR-Katalysator eine weitergehende Verbesserung der Abgassituation auch bei überwiegend mit im Mittel stöchiometrisch betriebenen Verbrennungsmotoren erzielen lässt, zumal hier ja wie oben angedeutet alternierend im leicht fetten bis leicht mageren Luft/Kraftstoffbereich gearbeitet wird und demzufolge NH₃-Produktion und NOx-Schlupf sich abwechseln (SAE 2011010307, DE102009056390A1, US20120247088A1, US8522536B2).

In der DE102009054046A1 werden Abgassysteme beschrieben, die das Konzept eines motornahen Dreiwegkatalysators und eines stromab befindlichen SCR-Katalysators vertiefen. U.a. wird ein System vorgeschlagen, bei dem ein cc-TWC gefolgt wird von einem uf-SCR und einem stromab dazu positionierten weiteren uf-TWC. Der abgasauslassseitig vom uf-SCR angeordnete uf-TWC ist laut dieser Offenbarung offensichtlich gleich ausgebildet wie der motornahe cc-TWC. Er dient scheinbar ausnahmslos dazu, durch den uf-SCR-Katalysator durchbrechendes NH₃ zu oxidieren.

Die DE102011121848A1 richtet sich ebenfalls auf ein Abgassystem bestehend aus Dreiwegkatalysator gefolgt von einem Ammoniak-SCR-Katalysator. Der Ammoniak-SCR-Katalysator weist (1.) einen Basismetallionen-substituierten Zeolithen und/oder ein Basismetallionen-substituiertes Siliziumaluminiumphosphat und (2.) ein Sauerstoffspeichermaterial auf, das aus der Gruppe ausgewählt ist, die aus einem Metalloxid oder einem Mischmetalloxid besteht, das eine Sauerstoffspeicherungs- und Freisetzkapazität aufweist. Die Serienanordnung des TWC und des Ammoniak-SCR-Katalysators steigert die Umwandlung von NOx zu N₂ in der durch den Motor erzeugten Abgasströmung mit geringem Sauerstoffgehalt. Es wird in der Offenbarung dieser Schrift erwähnt, dass der stromabwärtige Ammoniak-SCR-Katalysator grundsätzlich den gesamten oder einen Teil eines zweiten Dreiwegkatalysators in einem System mit zwei Dreiwegkatalysatoren ersetzen kann. Wie schon angedeutet weist der Ammoniak-SCR-Katalysator ein Sauerstoffspeichermaterial auf.

Die US2014/0039781 und US2009/0260349 offenbaren jeweils ein Katalysatorsystem mit Dreiwegekatalysatoren und SCR-Katalysator. Die vorliegende Erfindung hat sich zur Aufgabe gemacht, ein gegenüber dem Stand der Technik verbessertes Abgassystem anzugeben, welches neben der Verringerung der primären Schadgase auch die möglichst weitgehende Vermeidung von Sekundäremissionen, insbesondere NH₃ und N₂O im Auge hat. Diese und weitere sich aus dem nächstliegenden Stand der Technik für den Fachmann in naheliegender Weise ergebenden Aufgaben werden durch ein System mit den kennzeichnenden Merkmalen des vorliegenden Anspruchs 1 gelöst. Bevorzugte Ausgestaltungen des angesprochenen Systems finden sich in den von Anspruch 1 abhängigen Unteransprüchen. Ebenfalls Gegenstand der vorliegenden Erfindung ist ein Verfahren zur Säuberung von Abgasen aus überwiegend mit im Mittel stöchiometrischem Luft/Kraftstoff-Verhältnis betriebenen Benzinmotoren gemäß Anspruch 8.

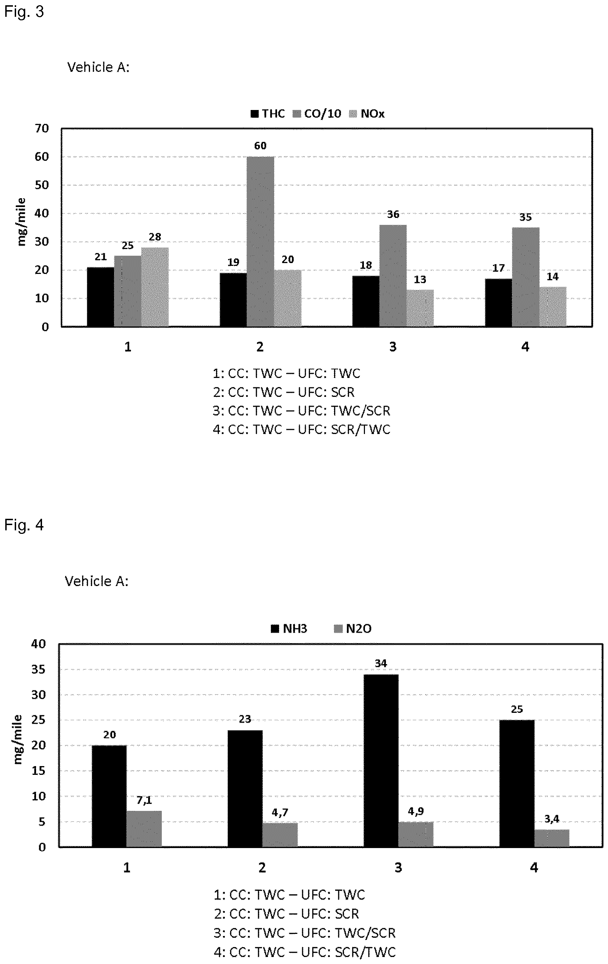

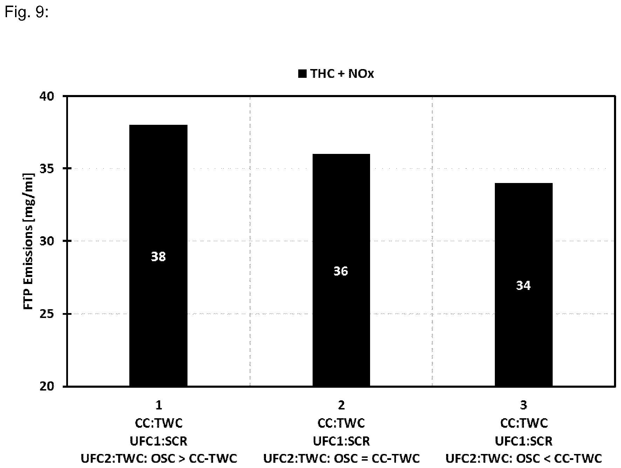

Dadurch, dass man ein Katalysatorsystem zur Verringerung von schädlichen Abgasen aus Fahrzeugen mit überwiegend im Mittel stöchiometrisch betriebenen Benzinverbrennungsmotoren zur Verfügung stellt, welches Aggregate in der folgenden Reihenfolge im Abgastrakt aufweist:
i) einen motornah angeordneten Dreiwegkatalysator
ii) einen im Unterboden des Fahrzeugs angeordneten SCR-Katalysator, welcher eine NH₃-Speicherfähigkeit aufweist, und
iii) einen stromab des SCR-Katalysators angeordneten weiteren Dreiwegkatalysator,
wobei der stromab des SCR-Katalysators angeordnete weitere Dreiwegkatalysator weniger Sauerstoffspeicherfähigkeit (im mg/L Kat) aufweist als der motornah angeordnete Dreiwegkatalysator, gelangt man sehr einfach, dafür aber nicht minder vorteilhaft zur Lösung der gestellten Aufgabe. Indem man ein wie oben dargestelltes Systemlayout zur Verminderung schädlichen Abgases wählt und dabei den abstromseitigen Dreiwegkatalysator mit einem geringeren Gehalt an Sauerstoffspeicherfähigkeit ausstattet als den motornah angeordneten Dreiwegkatalysator, erreicht man auf der einen Seite eine verbesserte Verringerung der primären Abgasbestandteile HC, CO und NOx (Fig. 9). Darüber hinaus zeigt ein derartiges System jedoch überraschenderweise auch ein drastisch verbessertes Ergebnis in Bezug auf den Ausstoß der Sekundäremissionen Lachgas (N₂O) und Ammoniak (NH₃) (Fig. 3 - Fig. 6).

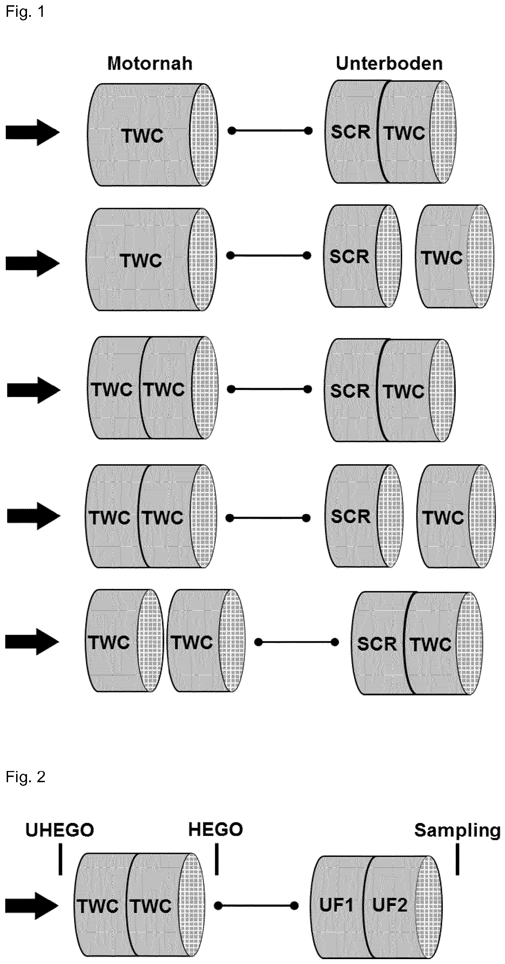

Das vorliegende Katalysatorsystem besteht demgemäß aus mindestens drei verschiedenen Aggregaten: einem motornahen Dreiwegkatalysator, einem im Unterboden befindlichen, Ammoniak speichernden SCR-Katalysator und einem hierzu abstromseitig angeordneten weiteren Dreiwegkatalysator (Fig. 1). Zu bedenken ist, dass der motornah angeordnete Dreiwegkatalysator sich vom abstromseitig zum SCR-Katalysator befindlichen Dreiwegkatalysator zumindest hinsichtlich der Sauerstoffspeicherfähigkeit unterscheidet. Unter Sauerstoffspeicherfähigkeit wird erfindungsgemäß die Fähigkeit verstanden, aus sauerstoffreichem, umgebenden Abgas in das Kristallgitter des Sauerstoffspeichermaterials Sauerstoff aufzunehmen und diesen bei Überschuss von reduzierenden Verbindungen an das umgebende Abgas abzugeben. Die Sauerstoffspeicherfähigkeit wird erfindungsgemäß ausgedrückt durch die Menge an aufgenommenem Sauerstoff pro Gramm/Molgewicht katalytisch aktiver Beschichtung bzw. Katalysatorvolumen (d.h. mg/L Kat). Das Einstellen des Verhältnisses an Sauerstoffspeicherfähigkeit eines Katalysators kann demgemäß durch Verwendung von mehr oder weniger eines Materials bewerkstelligt werden, welches zur Speicherung von Sauerstoff befähigt ist. Auf der anderen Seite ist es auch möglich, unterschiedliche Materialien zu verwenden, welche sich in der Sauerstoffspeicherkapazität (gemessen in µg gespeichertes O₂ / mmol Speicherkomponente) unterscheiden. Der Fachmann weiß, wie er dieses zu bewerkstelligen hat. Es ist im Frischzustand bevorzugt, wenn der motornahe Dreiwegkatalysator >50%, bevorzugt ≥60% und ganz besonders bevorzugt ≥70% der gesamten Sauerstoffspeicherfähigkeit (in im mg/L Kat) des erfindungsgemäßen Katalysatorsystems ausmacht.

Sauerstoff speichernde Materialien besitzen demnach Redox-Eigenschaften und können mit oxidierenden Komponenten wie Sauerstoff oder Stickoxiden in oxidierender Atmosphäre bzw. mit reduzierenden Komponenten wie Wasserstoff oder Kohlenmonoxid in reduzierender Atmosphäre reagieren. Beispiele Sauerstoff speichernder Materialien umfassen Cer und Praseodym oder entsprechende Mischoxide, welche zusätzlich folgende Komponenten ausgewählt aus der Gruppe von Zirkon, Neodym, Yttrium und Lanthan enthalten können. Häufig werden diese Sauerstoff speichernden Materialien mit Edelmetallen wie Pd, Rh und /oder Pt dotiert, wodurch sich die Speicherkapazität und Speichercharakteristik modifizieren lässt.

In der EP1911506 wird die Ausführung der Abgasnachbehandlung eines im Wesentlichen im mageren Bereich arbeitenden Verbrennungsmotors beschrieben. Eingesetzt wird dort ein mit einem Sauerstoffspeichermaterial versehener Partikelfilter. Vorteilhafter Weise besteht erfindungsgemäß ein derartiges Sauerstoff speicherndes Material aus einem Cer/Zirkon-Mischoxid. Weitere Oxide von insbesondere Seltenen Erdenmetallen können vorhanden sein. So enthalten bevorzugte Ausgestaltungen des erfindungsgemäßen Sauerstoffspeichermaterials zusätzlich Lanthanoxid oder Neodymoxid. Am häufigsten wird Ceroxid eingesetzt, welches sowohl als Ce₂O₃ als auch als CeO₂ vorliegen kann. Weitere nützliche Speichermaterialien sind z.B. in der WO05113126A, US6387338, US7041622, EP2042225A und EP1227231A sowie bei B.: E: Rohart, O. Larcher, S. Deutsch, C. Hedouin, H. Aimin, F. Fajardie, M. Allain, P. Macaudiere, Top. Catal. 2004, 30/31, 417-423 oder R. Di Monte, J. Kaspar, Top. Catal. 2004, 28, 47-57 beschrieben. Es wird diesbezüglich auch auf die Offenbarung der US6605264 und US6468941 verwiesen.

Derartige sauerstoffspeichernde Materialien finden auch bevorzugt in den erfindungsgemäßen Dreiwegkatalysatoren Anwendung. Das sauerstoffspeichernde Material ist wie schon angedeutet in der Lage, im mageren Sauerstoff aus dem Abgas zu entfernen und unter fetten Abgasbedingungen wieder frei zu setzen. Dadurch wird verhindert, dass die beim kurzzeitigen Abweichen des Kraftstoff-Luft Verhältnisses von λ=1 ins Magere der NOx-Umsatz über dem TWC abnimmt und es zu NOx-Durchbrüchen kommt. Ferner verhindert ein gefüllter Sauerstoffspeicher, dass es zu HC und CO Durchbrüchen kommt, wenn das Abgas kurzzeitig ins Fette übergeht, da unter fetten Abgasbedingungen zuerst der gespeicherte Sauerstoff mit dem überschüssigen HC und CO abreagiert, bevor es zum Durchbruch kommt. Der Sauerstoffspeicher dient in diesem Fall als Puffer gegen Schwankungen um λ=1. Ein halb gefüllter Sauerstoffspeicher weist die beste Performance auf, um kurzzeitige Abweichungen von λ=1 abfangen zu können. Um den Füllstand des Sauerstoffspeichers im Betrieb feststellen zu können, werden λ-Sensoren (DE19941051 A1; DE102008002734 A1; DE10216724 C1) verwendet, wobei im realen Fahrbetrieb nur zwischen den beiden extremen Zuständen voller und leerer Sauerstoffspeicher differenziert wird. Die Sauerstoffspeicherfähigkeit korreliert mit dem Alterungszustand des gesamten Dreiwegkatalysators. Die Bestimmung der Speicherfähigkeit dient im Rahmen der OBD (On Board Diagnose) zur Erkennung der aktuellen Aktivität und somit des Alterungszustandes des Katalysators.

Die eingesetzten Dreiwegkatalysatoren sind dem Fachmann hinlänglich bekannt. Es sei angemerkt, dass die hier eingesetzten Dreiwegkatalysatoren entweder aus einem Tragkörper bestehen oder mehrere einzelne in Strömungsrichtung benachbarte Dreiwegkatalysatoren umfassen können. Unter benachbart ist erfindungsgemäß eine Anordnung zu verstehen, bei der die den Dreiwegkatalysator ausmachenden Tragkörper auf Stoß oder in einem gewissen Abstand zueinander angeordnet sind. Dies trifft sowohl für den motornahen als auch für den im Unterboden befindlichen Dreiwegkatalysator zu, wobei äußerst bevorzugt keine weitere katalytische Einheit außer dem SCR-Katalysator zwischen dem cc-TWC und dem uf-TWC vorhanden ist. Bevorzugt ist jedoch eine Anordnung, bei der die die jeweiligen Dreiwegkatalysatoren (cc, uf) ausmachenden Tragkörper zusammenhängend positioniert und somit direkt hintereinander (auf Stoß) angeordnet sind.

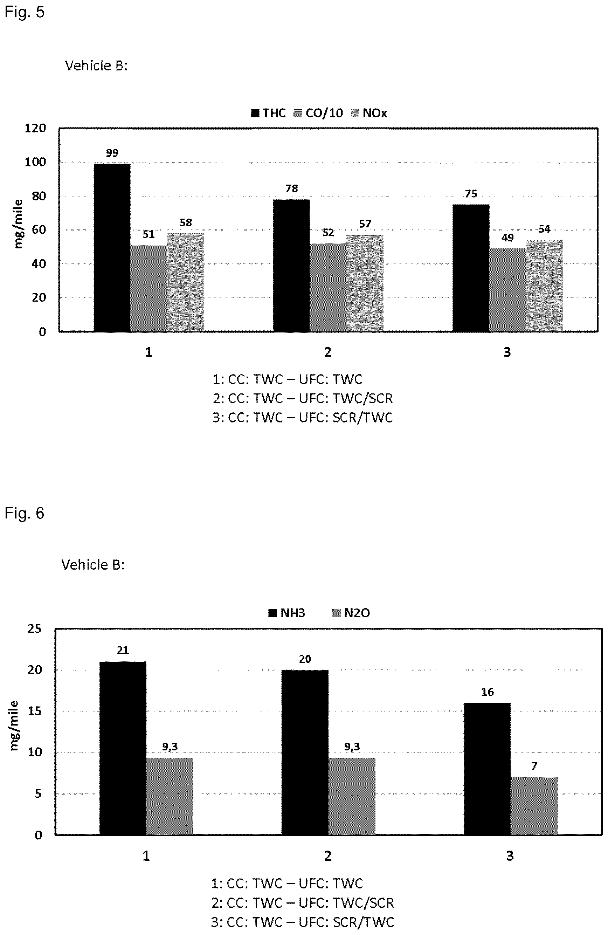

Der einzelne Tragkörper wird dabei so präpariert, dass die jeweilige katalytische Beschichtung auf oder in dem Träger bzw. den Tragkörpern vorhanden ist (siehe EP1974809A oder EP2308592A für Aufwand- und EP2042226A2 für Inwandbeschichtung). Vorliegend besteht der motornahe Dreiwegkatalysator aus vorzugsweise zwei Tragkörpern, die direkt hintereinander (auf Stoß) in einem Gehäuse angeordnet sind. Jedoch kann die hier beschriebene Verminderung der gasförmigen Schadstoffe auch durch einen einzelnen homogen oder ggf. zoniert beschichteten motornahen Dreiwegekatalysator realisiert werden. Die im Unterboden angeordnete Katalysatoreinheit besteht dagegen vorteilhafter Weise aus einem Tragkörper mit der SCR-Beschichtung und einem folgenden Tragkörper mit der Dreiwegbeschichtung. Letztere sind vorteilhaft ebenfalls direkt hintereinander (auf Stoß) in einem Gehäuse angeordnet. Ein solches System ist beispielsweise in der Fig. 5 schematisch wiedergegeben.

Die katalytisch aktive Beschichtung, welche vorliegend im motornahen (cc-) oder uf-TWC Verwendung findet, rekrutiert sich aus den Materialien, die dem Fachmann für diesen Zweck hinlänglich bekannt sind (M. V. Twigg, Catalysis Today 2011, 163, 33-41; EP1158146A2; EP0870531A1; EP0601314A1; EP0662862A1; EP0582971A1; EP0314058A1; EP0314057A1). Häufig weist die katalytische Beschichtung der Dreiwegkatalysatoren die Metalle Platin, Palladium und Rhodium in verschiedenster Zusammensetzung abgeschieden auf hochoberflächigen relativ temperaturunempfindlichen Metalloxiden, wie z.B. Aluminiumoxid bzw. Cer-Zirkonoxid auf. Die katalytische Beschichtung kann erfindungsgemäß, ggf. in unterschiedlicher Zusammensetzung zoniert und/oder in einer oder mehreren, ggf. unterschiedlich ausgestalteten katalytischen Beschichtungen übereinander auf dem oder den Träger(n) vorliegen (WO08113445A1, WO08000449A2; WO08113457A1; US8323599B2). Gängige Dreiwegbeschichtungen weisen darüber hinaus häufig weitere Funktionalitäten wie z.B. Kohlenwasserstoffspeieher oder Stickoxidspeicher (4-Wegkatalysator) auf. Die vorliegenden Dreiwegkatalysatoren, die diese genannten Funktionen ebenfalls innehaben können, besitzen aber ein den Sauerstoff im Autoabgas speicherndes Material, welches wie eingangs beschrieben in der Lage ist, Sauerstoff im mageren Bereich (λ>1) einzulagern und im fetten Bereich (λ<1) an das umgebende Medium abzugeben und welches erfindungsgemäß so über die Dreiwegkatalysatoren verteilt ist, dass im abstromseitig zum SCR-Katalysator befindlichen Dreiwegkatalysator weniger Sauerstoffspeicherfähigkeit vorhanden ist als am motornahen TWC. Das Vorhandensein oder die Abwesenheit von Sauerstoffspeicherfähigkeit kann dabei durch den Sprungtest bestimmt werden. Hierbei wird die Sauerstoffspeicherfähigkeit in mg/L Kat eines zwischen zwei λ-Sonden lokalisierten Katalysators oder eines Systems durch den bei Luftzahlsprüngen (z.B. zwischen Lambda 0.95-1.05) auftretenden Zeitversatz der beiden Sondensignale berechnet (Autoabgaskatalysatoren, Grundlagen - Herstellung - Entwicklung - Recycling - Ökologie, Christian Hagelüken, 2. Auflage, 2005, S. 62). Typischerweise erfolgt die Messung der Sauerstoffspeicherfähigkeit bei Abgastemperaturen im Bereich von 400-650°C vor dem Katalysatoreinlass und Abgasmassenströmen von 30-100 kg/h. Die geeignete Auswertung der Signale beider Sonden ist in DE4128823A1 detailliert beschrieben.

Die erfindungsgemäßen Dreiwegkatalysatoren (cc-TWC und uf-TWC) werden vorteilhafter Weise in der Form angewandt, dass mindestens 1 bevorzugt jedoch 2 oder mehr unterschiedliche katalytisch aktive Beschichtungen übereinander in mindestens 1 bzw. 2 oder mehr Bereichen in den Katalysatoren angeordnet werden. Bei mindestens 2 Bereichen befinden sich diese entweder auf einem Tragkörper in mindestens 2 separaten Zonen oder sind auf mindestens 2 hintereinander positionierte einzelne Tragkörper verteilt (z.B. Fig. 5). Sind mehrere Zonen/Tragkörper vorhanden, können diese vorteilhafter Weise einen mindestens 1-schichtigen oder einen 2-schichtigen Aufbau zeigen. Entsprechende Schichtaufbauten gelten auch für Dreiwegkatalysatoren mit 1 Bereich/Zone. In einer bevorzugten Ausführungsform besteht der erfindungsgemäße cc-TWC aus einem homogen beschichteten Monolithen bzw. aus mindestens zwei zusammenhängend positionierten Tragkörpern, die jeweils vorzugsweise mit einem zweischichtigen Dreiwegkatalysator beschichtet sind, der wie weiter oben geschrieben aufgebaut ist.

In einer vorteilhaften Ausgestaltung der vorliegenden Erfindung weist das Katalysatorsystem einen besonderen abstromseitig zum SCR-Katalysator befindlichen Dreiwegkatalysator (uf-TWC) auf. Dieser Dreiwegkatalysator zeichnet sich dadurch aus, dass er zwei unterschiedliche, übereinander liegende katalytische Beschichtungen aufweist, wobei bevorzugt ist, dass die Unterschicht (Schicht direkt auf dem Tragkörper) kein Sauerstoffspeichermaterial aufweist. Ebenso ist bevorzugt, dass die Unterschicht ausschließlich Palladium als katalytisch aktives Metall aufweist, welches vorteilhafter Weise auf mit Bariumoxid stabilisiertem, hochoberflächigen Aluminiumoxid (siehe EP1181970A1) abgeschieden ist. In der Oberschicht (Schicht zum Abgas hingewandt) des uf-TWCs kann vorteilhafter Weise sowohl Palladium als auch Rhodium vorhanden sein. Die Metalle in der katalytischen Oberschicht liegen auf hochoberflächigem Aluminiumoxid, welches gegebenenfalls durch Lanthanoxid, Praseodymoxid, Bariumoxid oder Yttriumoxid stabilisiert ist, und auf hochoberflächigem Ceroxid, Cer-Zirkonoxid, oder auf hochoberflächigem, durch Seltenerdoxide wie z.B. Lanthanoxid, Praseodymoxid, Neodymoxid oder Yttriumoxid, dotiertem Cer-Zirkonoxid abgeschieden vor (EP1974809B1; US8394348 B1).

Wie schon angedeutet weist ein Dreiwegkatalysator in der Regel Metalle aus der Gruppe bestehend aus Platin, Palladium, Rhodium und Mischungen derselben abgeschieden auf hochoberflächigem ggf. durch Dotierung stabilisierten Metalloxiden auf. Bevorzugt kommen in den erfindungsgemäß eingesetzten Dreiwegkatalysatoren (cc- und uf-TWC) jedoch nur die Metalle Palladium und Rhodium vor.

Die Zusammensetzung der besonders bevorzugten katalytisch aktiven Beschichtungen stellt sich wie folgt in vorteilhafter Weise dar:
cc-TWC:
Unterschicht (OSM = Sauerstoffspeichermaterial)

| | | | |
|---|---|---|---|
| Pd | 0.35-11.0 g/l | bevorzugt 0.70-7.06 g/l | bes. bevorzugt 1.00-5.30 g/l |
| Al₂O₃ | 20-120 g/l | bevorzugt 30-100 g/l | bes. bevorzugt 40-90 g/l |
| OSM | 20-120 g/l | bevorzugt 30-100 g/l | bes. bevorzugt 40-90 g/l |

Oberschicht (OSM = Sauerstoffspeichermaterial)

| | | | |
|---|---|---|---|
| Pd | 0.05-8.83 g/l | bevorzugt 0.1-7.06 g/l | bes. bevorzugt 0.15-5.30 g/l |
| Rh | 0.04-0.71 g/l | bevorzugt 0.07-0.50 g/l | bes. bevorzugt 0.11-0.37 g/l |
| Al₂O₃ | 20-120 g/l | bevorzugt 30-100 g/l | bes. bevorzugt 40-90 g/l |
| OSM | 20-120 g/l | bevorzugt 30-100 g/l | bes. bevorzugt 40-90 g/l |

uf-TWC:
Unterschicht:

| | | | |
|---|---|---|---|
| Pd | 0.35-11.0 g/l | bevorzugt 0.70-7.06 g/l | bes. bevorzugt 1.00-5.30 g/l |
| Al₂O₃ | 20-160 g/l | bevorzugt 50-150 g/l | bes. bevorzugt 70-140 g/l |

Oberschicht (OSM = Sauerstoffspeichermaterial):

| | | | |
|---|---|---|---|
| Pd | 0.05-8.83 g/l | bevorzugt 0.1-7.06 g/l | bes. bevorzugt 0.15-5.30 g/l |
| Rh | 0.04-0.71 g/l | bevorzugt 0.07-0.50 g/l | bes. bevorzugt 0.11-0.37 g/l |
| Al₂O₃ | 20-120 g/l | bevorzugt 30-100 g/l | bes. bevorzugt 40-90 g/l |
| OSM | 20-120 g/l | bevorzugt 30-100 g/l | bes. bevorzugt 40-90 g/l |

Der im Unterboden (uf) befindliche NH₃-speichernde SCR-Katalysator kann nach dem Fachmann bekannten Typen ausgebildet sein. In der Regel ist dies ein mit einem für die SCR-Reaktion katalytisch aktiven Material versehener Tragkörper oder ein Tragkörper, der aus einem katalytisch aktiven Material extrudiert wurde. Im erstgenannten Fall wird als katalytisch aktives Material gemeinhin der "Washcoat" verstanden, mit dem der Tragkörper versehen wird. Allerdings kann dieser neben der im eigentlichen Sinne katalytisch wirksamen Komponente auch weitere Materialien wie Binder aus Übergangsmetalloxiden und hochoberflächige Trägeroxide wie Titanoxid, Aluminiumoxid, insbesondere gamma-Al₂O₃, Zrikon- oder Ceroxid enthalten.

Das erfindungsgemäß eingesetzte eigentlich katalytisch aktive Material wird bevorzugt aus der Gruppe der übergangsmetallausgetauschten Zeolithe oder zeolithähnlichen Materialien ausgewählt. Derartige Verbindungen sind dem Fachmann hinreichend bekannt. Bevorzugt sind diesbezüglich Materialien aus der Gruppe bestehend aus Chabazit, SAPO-34, ALPO-34, Zeolith β und ZSM-5. Besonders bevorzugt werden Zeolithe bzw. zeolithähnliche Materialien vom Chabazit-Typ, insbesondere CHA oder SAPO-34, verwendet. Diese Materialien sind, um eine ausreichende Aktivität zu gewährleisten, vorzugsweise mit Übergangsmetallen aus der Gruppe bestehend aus Eisen, Kupfer, Mangan und Silber versehen. Ganz besonders vorteilhaft ist Kupfer in diesem Zusammenhang zu nennen. Der Fachmann weiß dabei, wie er die Zeolithe oder das zeolithähnliche Material mit den Übergangsmetallen zu versehen hat (EP324082A1; WO1309270711A1, PCT/EP2012/061382 sowie dort zitierte Literatur), um eine gute Aktivität gegenüber der Reduktion von Stickoxiden mit Ammoniak bereitstellen zu können. Ferner können auch Vanadiumverbindungen, Ceroxide, Cer-/Zirkonmischoxide, Titandioxid sowie wolframhaltige Verbindungen und Mischungen davon als katalytisch aktives Material verwendet werden.

Materialien, welche sich darüber hinaus für die Anwendung zur Speicherung von NH₃ als günstig erwiesen haben, sind dem Fachmann bekannt (US2006/0010857AA; WO2004076829A1). Als Speichermaterialien kommen insbesondere mikroporöse Feststoffe, z.B. so genannte Molekularsiebe zum Einsatz. Es können solche Verbindungen ausgewählt aus der Gruppe bestehend aus Zeolithen, wie z.B. Mordenite (MOR), Y-Zeolithe (FAU), ZSM-5 (MFI), Ferrierite (FER), Chabazite (CHA), und β-Zeolithe (BEA) sowie zeolithähnlichen Materialien, wie z.B. Aluminiumphosphate (AIPO) und Siliziumaluminiumphosphat SAPO oder Mischungen davon eingesetzt werden (EP0324082 A1). Besonders bevorzugt werden ZSM-5 (MFI), Chabazite (CHA), Ferrierite (FER), ALPO- bzw. SAPO-34 und β-Zeolithe (BEA) eingesetzt. Ganz besonders bevorzugt werden CHA, BEA und AIPO-34 bzw. SAPO-34 verwendet. Äußerst bevorzugt werden Materialien des CHA-Typs und hier höchst bevorzugt CHA und SAPO-34 verwendet. Sofern man als katalytisch aktives Material im SCR-Katalysator schon einen wie eben genannten Zeolithen oder zeolithähnliche Verbindung benutzt, kann naturgemäß die Zugabe weiteren NH₃-speichernden Materials vorteilhafter Weise entfallen. Insgesamt sollte die Speicherkapazität der eingesetzten Ammoniakspeicherkomponenten im Frischzustand bei einer Messtemperatur von 200°C mehr als 0.9 g NH₃ pro Liter Katalysatorvolumen, bevorzugt zwischen 0.9 und 2.5 g NH₃ pro Liter Katalysatorvolumen und besonders bevorzugt zwischen 1.2 und 2.0 g NH₃/Liter Katalysatorvolumen und ganz besonders bevorzugt zwischen 1.5 und 1.8 g NH₃/Liter Katalysatorvolumen betragen. Die Ammoniakspeicherfähigkeit kann mit Hilfe einer Synthesegasanlage bestimmt werden. Hierzu wird der Katalysator zunächst bei 600°C mit NO-haltigem Synthesegas konditioniert, um Ammoniak Rückstände im Bohrkern vollständig zu entfernen. Nach Abkühlen des Gases auf 200°C wird anschließend, bei einer Raumgeschwindigkeit von z.B. 30000 h⁻¹, so lange Ammoniak in das Synthesegas dosiert, bis der Ammoniakspeicher des Bohrkerns vollständig gefüllt ist und die gemessene Ammoniakkonzentration nach dem Bohrkern der Eingangskonzentration entspricht. Die Ammoniakspeicherfähigkeit ergibt sich aus der Differenz der insgesamt dosierten und der abströmseitig gemessenen Ammoniakmenge bezogen auf das Katalysatorvolumen. Das Synthesegas ist hierbei typischerweise aus 450 ppm NH₃, 5% Sauerstoff, 5% Wasser und Stickstoff zusammengesetzt. In einer weiteren bevorzugten Ausführungsform besitzt der SCR-Katalysator keine Fähigkeit, Sauerstoff zu speichern. In diesem Fall weist der uf-SCR-Katalysator kein sauerstoffspeicherfähiges Material auf.

Wie eingangs angedeutet entstehen schädliche Sekundäremissionen, insbesondere N₂O dann vermehrt über einen im Unterboden befindlichen uf-TWC, wenn dieser sich in einem Temperaturfenster befindet, welches sich im Bereich zwischen 250-350°C bewegt. Mit der neuen Systemanordnung ist die Gefahr der Lachgasbildung über den im Unterboden befindlichen Dreiwegkatalysator drastisch verringert (Fig. 2 und 4), weshalb der eben geschilderte Temperaturbereich keine wesentliche Sekundäremissionsquelle mehr darstellt. Für den Fachmann ist klar, dass die im Unterboden befindlichen Katalysatoren naturgemäß möglichst oft in Ihrem optimalen Temperaturfenster arbeiten sollten, um zu einer größtmöglichen Verringerung der schädlichen Bestandteile im Abgas beitragen zu können. Demzufolge sollten diese Katalysatoren (uf-SCR und uf-TWC) in einem Temperaturbereich von 200°C bis 800°C betrieben werden. Vorzugsweise ist dieser Bereich auf 250°C bis 600°C zu tarieren. Im optimalen Fall arbeitet das Katalysatorgespann (uf-SCR und uf-TWC) jedoch in einem Temperaturfenster von 250-450°C. Der Fachmann weiß, wie er die Temperatur des Abgases und der Katalysatoren im Unterboden eines Fahrzeugs beeinflussen kann, damit ein derartiger Temperaturbereich möglichst einfach und kostengünstig zu realisieren ist. Eine relativ einfache Maßnahme besteht z.B. darin, einen bestimmten Abstand zum motornah positionierten cc-TWC einzuhalten. Eine bevorzugte Ausführungsformen geht daher davon aus, dass der Abstand zwischen motornahem Dreiwegkatalysator und uf-SCR-Katalysator so gewählt wird, dass während des Fahrbetriebs eine Temperatur von 250°C bis 450°C am uf-SCR-Katalysator angestrebt wird. Unter motornah wird im Rahmen der Erfindung ein Abstand vom Motorauslass von weniger als 80 cm, bevorzugt weniger als 60 cm und ganz bevorzugt weniger als 50 cm bis zum Katalysatoreinlass verstanden. Unter der Unterbodenposition versteht der Fachmann eine Position unterhalb der Fahrkabine in einem Abstand von 30 - 200 cm, bevorzugt 40 - 150 cm und besonders bevorzugt 50 - 120 cm vom Auslass des motornahen Tragkörpers.

Die vorliegende Erfindung ist ebenfalls auf ein Verfahren zur Verringerung von schädlichen Abgasen aus Fahrzeugen mit überwiegend im Mittel stöchiometrisch betriebenen Benzinverbrennungsmotoren gerichtet, wobei das Abgas während des Fahrbetriebs über ein wie oben beschriebenes System geleitet wird. Es versteht sich von selbst, dass die für das System beschriebenen vorteilhaften Ausgestaltungen ebenfalls im Rahmen des beanspruchten Verfahrens Geltung erhalten.

Grundsätzlich bestehen die hier erwähnten Abgaskatalysatoren aus einem oder mehreren benachbarten Tragkörpern, auf den/die oder in den/die - z.B. in die porösen Wandstrukturen - die katalytisch aktive Beschichtung aufgetragen wird. Dem Fachmann ist klar, um welche Träger es sich vorliegend handeln kann. Gemeint sind so genannte Durchfluss-Monolithe oder Partikelfilter (Christian Hagelüken, Autoabgaskatalysatoren, 2005, 2. Auflage, S. 27 - 46). Derartige Aggregate (Filter als auch Durchfluss-Monolithe) sind - auch mit einer SCR- oder TWC-aktiven Beschichtung versehen - dem Fachmann hinlänglich geläufig (z.B. für Filter DE102010055147A1; US20100293929; US20110252773; US20110158871; DE102012105822A1; EP1961933A1; DE102012015840A1, WO13014467A1, US2010287915AA, EP2117681A; EP2117707A).

Im Stand der Technik bekannte übliche Filterkörper können aus Metall und/oder keramischen Materialien aufgebaut sein. Dazu gehören beispielsweise metallische Gewebe- und Gestrickfilterkörper, Sintermetallkörper und Schaumstrukturen aus keramischen Materialien. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierbei wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Durch die Porosität, Poren-/Radienverteilung, und Dicke der Wand kann die Filtrationseigenschaft für Partikel ausgelegt werden. Die katalytisch aktive Beschichtung liegt in und/oder auf den porösen Wänden zwischen An- und Abströmkanälen vor. Bevorzugt einzusetzende TWC-Filtersubstrate können der europäischen Patentanmeldung EP2650042A1, EP2042225A1, EP2042226A2 entnommen werden. Bevorzugt einzusetzende SCR-Filtersubstrate können der europäischen Patentanmeldung EP2117681A und EP1961933A1 entnommen werden.

Durchfluss-Monolithe sind im Stand der Technik übliche Katalysatorträger, die aus Metall oder keramischen Materialien bestehen können. Bevorzugt werden feuerfeste Keramiken wie zum Beispiel Cordierit eingesetzt. Die Monolithe aus Keramik besitzen meist eine wabenförmige Struktur, die aus durchgehenden Kanälen bestehen, weshalb diese auch als Kanal-Fluss-Monolithe oder Durchfluss-Monolithe bezeichnet werden. Das Abgas kann durch die Kanäle strömen und kommt dabei mit den Kanalwänden in Kontakt, welche mit einer katalytisch aktiven Beschichtung versehen sind. Die Anzahl der Kanäle pro Fläche wird durch die Zelldichte charakterisiert, welche üblicherweise zwischen 300 und 900 Zellen pro Quadrat Zoll (cells per square inch, cpsi) liegt. Die Wanddicke der Kanalwände beträgt bei Keramiken zwischen 0,5 - 0,05 mm.

Als Tragkörper eignen sich besonders bevorzugt keramische Wabenkörper, sowohl Durchflusssubstrate als auch keramische Filterkörper aus z.B. Cordierit, sowie analoge Träger aus Metall (siehe oben). Hierbei kommen bevorzugt runde oder ovale Träger mit einem Durchmesser von 63,5-152,1 mm und einer Länge von 76,6-152,4 mm zum Einsatz. Für die Verwirklichung des erfindungsgemäßen Konzepts kann ein motornaher Katalysator mit einer oder zwei Beschichtungszonen, oder mehrere seriell angeordnete motornahe Katalysatoren mit den entsprechenden Beschichtungen verwendet werden. Die motornah platzierten Katalysatoren sind vorzugsweise in einem gemeinsamen Gehäuse und auf Stoß angebracht. Die im Unterboden befindlichen Katalysatoren bilden vorzugsweise ein weiteres auf Stoß gebautes Gespann, welches ebenfalls in einem Gehäuse untergebracht ist.

Die vorliegende Erfindung erlaubt es, die Primäremissionen eines überwiegend im Mittel stöchiometrisch betriebenen Benzinmotors effektiv zu erniedrigen. Darüber hinaus ist es jedoch auch möglich mit dem vorliegenden System die Sekundäremissionen (NH₃ und N₂O) soweit zu verringern, dass auch aktuelle und zukünftige Gesetzgebungen, die diese Emissionen mitberücksichtigen, sicher eingehalten werden können. Dies war vor dem Hintergrund des bekannten Standes der Technik für den Fachmann nicht in nahe liegender Weise zu erwarten.

### Figurenbeschreibung:

Fig. 1: Denkbare Katalysatorsysteme zur erfindungsgemäßen Verringerung der gasförmigen Schadstoffe Kohlenwasserstoffe THC, Kohlenmonoxid CO, Stickoxide NOx und der sekundäremissionen Lachgas N₂O und Ammoniak NH₃ bei mit Benzin betriebenen Verbrennungsmotoren.
Fig. 2: Verwendeter Versuchsaufbau für die Motorprüfstand- und Fahrzeugtests.
Fig. 3: Zeigt die bei FTP-75 Tests am Motorprüfstand emittierten gasförmigen Schadstoffe Kohlenwasserstoffe THC (schwarz), Kohlenmonoxid CO (dunkelgrau) und Stickoxide NOx (hellgrau) in mg/mile für die untersuchten Systeme 1-4.
Fig. 4: Zeigt die bei FTP-75 Tests am Motorprüfstand emittierten Sekundäremissionen Ammoniak NH3 (schwarz) und Lachgas N₂O (grau) in mg/mile für die untersuchten Systeme 1-4.
Fig. 5: Zeigt die bei FTP-75 Tests am 1.4L Fahrzeug emittierten gasförmigen Schadstoffe Kohlenwasserstoffe THC (schwarz), Kohlenmonoxid CO (dunkelgrau) und Stickoxide NOx (hellgrau) in mg/mile für die untersuchten Systeme 1-3.
Fig. 6: Zeigt die bei FTP-75 Tests am 1.4L Fahrzeug emittierten Sekundäremissionen Ammoniak NH3 (schwarz) und Lachgas N₂O (grau) in mg/mile für die untersuchten Systeme 1-3.
Fig. 7: Zeigt die Temperatur innerhalb des Unterbodenkatalysators UFC bei einem FTP-75 Test am Motorprüfstand, gemessen 1 Zoll nach dem Einlass des keramischen Monolithen.

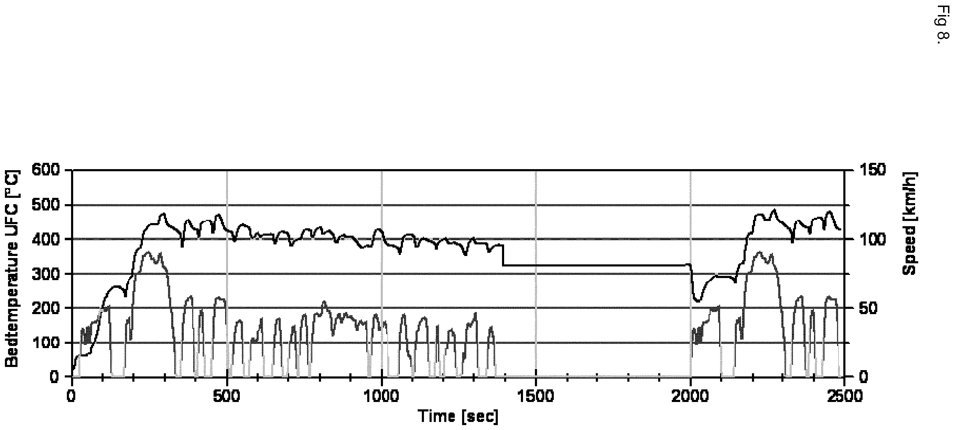

Fig. 8: Zeigt die Temperatur innerhalb des Unterbodenkatalysators UFC bei einem FTP-75 Test am 1.4L Fahrzeug, gemessen 1 Zoll nach dem Einlass des keramischen Monolithen.
Fig. 9: Zeigt die kumulierten Emissionen eines erfindungsgemäßen Systems im Vergleich mit 2 nicht erfindungsgemäßen Katalysatoranordnungen.

### Beispiele:

### Beispiel 1:

Die keramischen Substrate wurden nach aktuellem Stand der Technik mit den verschiedenen Washcoats zu den in Fig. 2 dargestellten Katalysatoren beschichtet. Die motornahen Katalysatoren wurden im Anschluss in einer ZDAKW-Alterung am Motorprüfstand gealtert, sodass eine Laufleistung im Fahrzeug von 160.000 km simuliert wurde. Die Alterung zeichnet sich durch regelmäßige Schubabschaltungsphasen aus, was dann bei temporär magerer Abgaszusammensetzung zu einer Betttemperatur von über 1000 °C führt. Diese Konditionen bedingen eine irreversible Schädigung des Sauerstoffspeichermaterials und der Edelmetalle. Die Unterbodenkatalysatoren wurden aufgrund der niedrigen Abgastemperatur bei einer Betttemperatur von 800°C gealtert. Diese Katalysatoren wurden im weiteren Verlauf an einem hochdynamischen Motorprüfstand, an einer aktuellen 2.0L Vierzylinderapplikation, im dynamischen FTP-75 Fahrzyklus getestet (Fig. 2). Dabei wurde der Abstand der motornahen Katalysatoren von den Unterbodenkatalysatoren so gewählt, dass die Betttemperatur der Unterbodenkonverter 400°C nicht überschritt. Die Messung der Schadstoffkonzentrationen von THC, CO und NOx erfolgte durch kontinuierliche Modalanalyse. Lachgas und Ammoniak wurden mittels FTIR-Messung bestimmt. Nach Beendigung des Tests wurden die Modalkonzentrationen kumuliert und die daraus resultierenden Schadstoffmassen entsprechend der aktuellen US-Gesetzgebung gewichtet. Die Ergebnisse sind in Fig. 3-4 dargestellt. Die Systeme 3 und 4 zeigen gegenüber dem System 1 deutliche Vorteile in den Stickoxidemissionen. System 4 zeichnet sich gegenüber dem System 3 jedoch durch signifikant niedrigere Ammoniak und Lachgasemissionen aus.

### Beispiel 2:

Die keramischen Substrate wurden nach aktuellem Stand der Technik mit den ver-schiedenen Washcoats zu den in Fig. 2 dargestellten Katalysatoren beschichtet. Die motornahen Katalysatoren wurden Im Anschluss in einer ZDAKW-Alterung am Motor-prüfstand gealtert, sodass eine Laufleistung im Fahrzeug von 160.000 km simuliert wurde. Die Alterung zeichnet sich durch regelmäßige Schubabschaltungsphasen aus, was dann bei temporär magerer Abgaszusammensetzung zu einer Betttemperatur von über 1000 °C führt. Diese Konditionen bedingen eine irreversible Schädigung des Sau-erstoffspeichermaterials und der Edelmetalle. Die Unterbodenkatalysatoren wurden aufgrund der niedrigen Abgastemperatur bei einer Betttemperatur von 800°C gealtert. Diese Katalysatoren wurden im weiteren Verlauf an einer aktuellen 1.4L Vierzylinder-Turbo Applikation mit Benzindirekteinspritzung im dynamischen FTP-75 Fahrzyklus getestet (Fig. 2). Der Abstand der motornahen Katalysatoren von den Unterbodenkatalysatoren betrug wie in der Serienkonfiguration ca. 110 cm. Das Abgas der jeweiligen Phasen des FTP-75 wurde in einem CVS-System in drei verschiedenen Beuteln gesammelt. Nach Beendigung des Tests wurden die Beutel analysiert und entsprechend der aktuellen US-Gesetzgebung gewichtet. Lachgas und Ammoniak wurden mittels kontinuierlicher FTIR-Messung bestimmt. Nach Beendigung des Tests wurden die Konzentrationen kumuliert und die daraus resultierenden Schadstoffmassen analog der Beutelergebnisse, entsprechend der aktuellen US-Gesetzgebung, gewichtet. Die Ergebnisse sind in Fig 5-6 dargestellt. Das System 3 zeigt gegenüber den Systemen 1 und 2 Vorteile in den Schadstoffen THC, CO und NOx. Zudem zeichnet sich das System 3 gegenüber den übrigen Systemen 1 und 2 durch signifikant niedrigere Ammoniak und Lachgasemissionen aus.

### Beispiel 3:

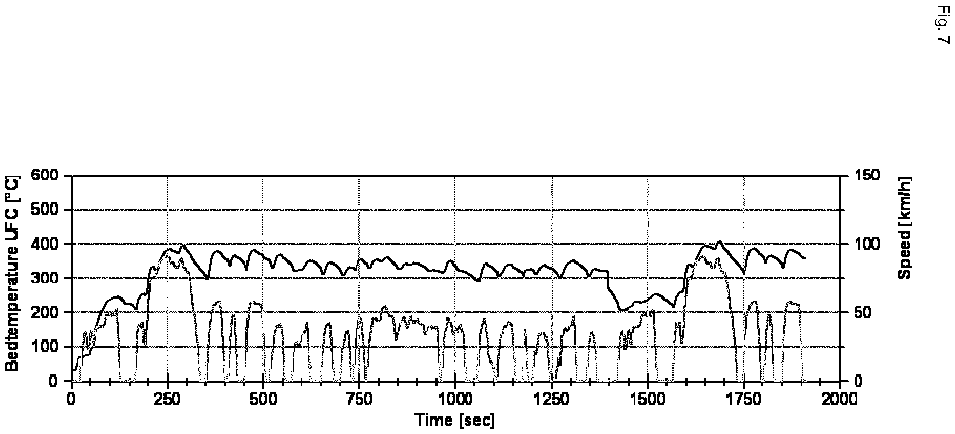

Die keramischen Substrate wurden nach aktuellem Stand der Technik mit den verschiedenen Washcoats zu den in Fig. 2 dargestellten Katalysatoren beschichtet. Die motornahen Katalysatoren wurden im Anschluss in einer ZDAKW-Alterung am Motorprüfstand gealtert, sodass eine Laufleistung im Fahrzeug von 160.000 km simuliert wurde. Die Alterung zeichnet sich durch regelmäßige Schubabschaltungsphasen aus, was dann bei temporär magerer Abgaszusammensetzung zu einer Betttemperatur von über 1000 °C führt. Diese Konditionen bedingen eine irreversible Schädigung des Sauerstoffspeichermaterials und der Edelmetalle. Die Unterbodenkatalysatoren wurden aufgrund der niedrigen Abgastemperatur bei einer Betttemperatur von 800°C gealtert. Hierbei wurden drei verschiedene stromab des SCR Katalysators angeordnete Dreiwegekatalysatoren untersucht. Die beiden Einträge 1 und 2 beinhalten stromab des SCR-Katalysators angeordnete Dreiwegekatalysatoren, welche mehr oder gleich viel Sauerstoffspeicherfähigkeit, berechnet in mg pro Liter Katalysatorvolumen, aufweisen als der motornahe Dreiwegekatalysator. Im erfindungsgemäßen Eintrag 3 weist der stromab des SCR Katalysators angeordnete Dreiwegekatalysator jedoch eine geringere Sauerstoffspeicherfähigkeit auf als der motornahe Dreiwegekatalysator. Diese Katalysatoren wurden im weiteren Verlauf an einem hochdynamischen Motorprüfstand, an einer aktuellen 2.0L Vierzylinderapplikation, im dynamischen FTP-75 Fahrzyklus getestet (Fig. 2). Dabei wurde der Abstand der motornahen Katalysatoren von den Unterbodenkatalysatoren so gewählt, dass die Betttemperatur der Unterbodenkonverter 400°C nicht überschritt (Fig. 7). Die Messung der Schadstoffkonzentrationen von THC, CO und NOx erfolgte durch kontinuierliche Modalanalyse. Nach Beendigung des Tests wurden die Modalkonzentrationen kumuliert und die daraus resultierenden Schadstoffmassen entsprechend der aktuellen US-Gesetzgebung gewichtet. Die Ergebnisse sind in Fig. 9 dargestellt. Das erfindungsgemäße System 3 zeigt gegenüber den Systemen 1 und 2 niedrigere Emissionen.

## Patentansprüche

1. Katalysatorsystem zur Verringerung von schädlichen Abgasen aus Fahrzeugen mit überwiegend im Mittel stöchiometrisch betriebenen Benzinverbrennungsmotoren aufweisend in dieser Reihenfolge:
i) einen motornah angeordneten Dreiwegkatalysator
ii) einen im Unterboden des Fahrzeugs angeordneten SCR-Katalysator, welcher eine NH₃-Speicherfähigkeit aufweist, und
iii) einen stromab des SCR-Katalysators angeordneten weiteren Dreiwegkatalysator,
**dadurch gekennzeichnet, dass**
der stromab des SCR-Katalysators angeordnete weitere Dreiwegkatalysator weniger Sauerstoffspeicherfähigkeit in mg pro Liter Katalysatorvolumen aufweist, als der motornah angeordnete Dreiwegkatalysator.

2. Katalysatorsystem nach Anspruch 1,
**dadurch gekennzeichnet, dass**
der abstromseitig angeordnete Dreiwegkatalysator zwei unterschiedliche, übereinander liegende katalytische Beschichtungen aufweist.

3. Katalysatorsystem nach Anspruch 2,
**dadurch gekennzeichnet, dass**
die untere Schicht kein Sauerstoffspeichermaterial aufweist.

4. Katalysatorsystem nach Anspruch 3,
**dadurch gekennzeichnet, dass**
die untere Schicht ausschließlich Palladium als katalytisch aktives Metall aufweist.

5. Katalysatorsystem nach Anspruch 4,
**dadurch gekennzeichnet, dass**
die obere Schicht als einzige katalytisch aktive Metalle Palladium und Rhodium und sauerstoffspeicherfähiges Material aufweist.

6. Katalysatorsystem nach einem oder mehreren der vorhergehenden Ansprüche,
**dadurch gekennzeichnet, dass**
der uf-SCR-Katalysator kein sauerstoffspeicherfähiges Material aufweist.

7. Katalysatorsystem nach einem oder mehreren der vorhergehenden Ansprüche,
**dadurch gekennzeichnet, dass**
der Abstand zwischen motornahem Dreiwegkatalysator und uf-SCR-Katalysator so gewählt wird, dass während des Fahrbetriebs eine Temperatur von 300°C bis 400°C am uf-SCR-Katalysator angestrebt wird.

8. Verfahren zur Verringerung von schädlichen Abgasen aus Fahrzeugen mit überwiegend im Mittel stöchiometrisch betriebenen Benzinverbrennungsmotoren,
**dadurch gekennzeichnet, dass**
das Abgas während des Fahrbetriebs über ein System der Ansprüche 1 - 7 geleitet wird.

## Claims

1. Catalyst system for reducing harmful exhaust gases from vehicles with gasoline combustion engines operated predominantly, on average, stoichiometrically, having, in this sequence:
i) a three-way catalyst arranged close to the engine,
ii) an SCR catalyst, arranged in the underfloor of the vehicle, having an NH₃-storing capacity, and
iii) an additional three-way catalyst arranged downstream of the SCR catalyst,
**characterized in that**
the additional three-way catalyst arranged downstream of the SCR catalyst has less oxygen-storing capacity in mg per liter of catalyst volume than the three-way catalyst close to the engine.

2. Catalyst system according to claim 1,
**characterized in that**
the three-way catalyst arranged on the downstream side has two different catalytic coatings lying one on top of the other.

3. Catalyst system according to claim 2,
**characterized in that**
the lower layer has no oxygen-storing material.

4. Catalyst system according to claim 3,
**characterized in that**
the lower layer has only palladium as catalytically active metal.

5. Catalyst system according to claim 4,
**characterized in that**
the upper layer has palladium and rhodium as the only catalytically active metals, and oxygen-storing-capable material.

6. Catalyst system according to one or more of the previous claims,
**characterized in that**
the uf-SCR catalyst has no oxygen-storing-capable material.

7. Catalyst system according to one or more of the previous claims,
**characterized in that**
the distance between the three-way catalyst close to the engine and the uf-SCR catalyst is selected so that a temperature of 300 °C to 400 °C is striven for on the uf-SCR catalyst during driving operation.

8. Process for reducing harmful exhaust gases from vehicles with gasoline combustion engines operated predominantly, on average, stoichiometrically,
**characterized in that**
the exhaust gas is guided over a system as per claims 1 - 7 during driving operation.

## Revendications

1. Système de catalyseur pour la réduction de gaz d'échappement nocifs provenant de véhicules comprenant des moteurs à combustion interne à essence fonctionnant principalement, en moyenne, de manière stoechiométrique, comprenant, dans l'ordre suivant :
i) un catalyseur trois voies, disposé à proximité du moteur
ii) un catalyseur SCR (à réduction catalytique sélective) disposé dans le bas de caisse du véhicule, présentant une capacité de stockage du NH₃ et
iii) un autre catalyseur trois voies disposé en aval du catalyseur SCR,
**caractérisé en ce que**
l'autre catalyseur trois voies disposé en aval du catalyseur SCR présente une capacité de stockage de l'oxygène en mg par litre du volume de catalyseur inférieure à celle du catalyseur trois voies disposé près du moteur.

2. Système de catalyseur selon la revendication 1,
**caractérisé en ce que**
le catalyseur trois voies disposé en aval présente deux revêtements catalytiques différents superposés.

3. Système de catalyseur selon la revendication 2,
**caractérisé en ce que**
la couche inférieure ne présente aucun matériau de stockage de l'oxygène.

4. Système de catalyseur selon la revendication 3,
**caractérisé en ce que**
la couche inférieure présente exclusivement du palladium en guise de métal catalytiquement actif.

5. Système de catalyseur selon la revendication 4,
**caractérisé en ce que**
la couche supérieure présente, en guise de métaux catalytiquement actifs uniques, du palladium et du rhodium, ainsi qu'un matériau à capacité de stockage de l'oxygène.

6. Système de catalyseur selon une ou plusieurs des revendications précédentes,
**caractérisé en ce que**
le catalyseur UF-SCR (à réduction catalytique sélective sous le plancher) ne présente aucun matériau à capacité de stockage de l'oxygène.

7. Système de catalyseur selon une ou plusieurs des revendications précédentes,
**caractérisé en ce que**
la distance entre le catalyseur trois voies à proximité du moteur et le catalyseur UF-SCR est sélectionnée de sorte que, pendant le fonctionnement de conduite, une température de 300 °C à 400 °C est ciblée au niveau du catalyseur UF-SCR.

8. Procédé pour la réduction de gaz d'échappement nocifs provenant de véhicules comprenant des moteurs à combustion interne à essence fonctionnant principalement, en moyenne, de manière stoechiométrique,
**caractérisé en ce que**
le gaz d'échappement est guidé sur un système selon les revendications 1 à 7 pendant le fonctionnement de conduite.
